# EUROPEAN PATENT SPECIFICATION

(11) **EP 0 378 570 B1**
(45) Date of publication and mention of the grant of the patent: **22.05.1996**
(21) Application number: 88908231.9
(22) Date of filing: 14.09.1988
(51) Int. Cl.: G01F 1/46, F04D 27/00

(54) **A DEVICE FOR MEASURING THE VOLUME FLOW OF A FAN**
ANORDNUNG ZUR MESSUNG DES VOLUMENFLUSSES EINES VENTILATORS
DISPOSITIF DE MESURE DE FLUX VOLUMIQUE D'UN VENTILATEUR

(30) Priority: 15.09.1987 FI 874009
(43) Date of publication of application: 25.07.1990
(73) Proprietor: ILMATERA OY, SF-02700 Kauniainen (FI)
(72) Inventor: PAANANEN, Tapio, SF-08500 Lohja AS (FI); NYMAN, Mikko, SF-00330 Helsinki (FI); LAINE, Juhani, SF-00780 Helsinki (FI)
(74) Representative: Barlow, Roy James
(86) International application number: FI8800149
(87) International publication number: WO8902581

(56) References cited:
- DE-A- 2 113 151
- DE-A- 3 343 284
- US-A- 1 508 017
- US-A- 3 733 900
- US-A- 3 751 982
- US-A- 3 759 098
- US-A- 4 290 315
- US-A- 4 559 835
- US-A- 4 735 100

## Description

The invention relates to a measuring device for measuring the volume flow rate of a fan in an air-conditioning plant or in some other air-treatment system.

The air volume flow rate in an air-conditioning plant is generally measured according to the multi-point methods presented in Directive 2:1984 issued by the Finnish National Board of Public Construction. In multi-point methods the volume flow of air is obtained as the product of the mean air velocity and the cross-sectional area of the flow in the duct. The mean velocity of the air is determined by measuring the air velocity at mathematically predetermined points of the cross section of the duct and by calculating the mean of these velocities. Depending on the size of the duct, the measuring points number 5 - 24.

Another method for measuring the air volume flow rate in an air-conditioning plant is to measure in a measuring device fixedly installed in the duct system the pressure difference proportional to the air volume flow rate. In connection with such a device there is always throttling means, which may be, for example, a throttling flange, a nozzle, a venturi tube, a Dall tube or a segment flange, for producing the pressure difference.

The method for determining the volume flow rate of a fan in an air-conditioning plant is based on the measuring of the total pressure and rotative velocity of the fan and the electric power taken by the fan motor. The volume flow of the fan is obtained with the aid of these from the characteristic curve charts prepared by the fan manufacturer.

Another method for determining the volume flow rate of a fan is in use in the fans used in civil defense shelters in Finland. A by-pass via a rotameter is obtained by using airflow throttling means located in the pressure aperture of the fan. The rotameter is calibrated to indicate the air volume flow rate of the fan.

The multi-point system for volume-flow rate determination is cumbersome. In practice it is also susceptible to errors, since complicated air-conditioning ducts seldom have a disturbance-free flow profile required by reliable measuring.

Owing to the throttling means, the permanent pressure loss caused by measuring devices fixedly installed in a duct system is usually significant, and the lower limit of the measuring range is limited to correspond to relatively high volume flow rates.

The method for determining the volume flow rate in a fan with the aid of a characteristic curve chart of the fan is very approximate.

The throttling means used in fans in civil defense shelters causes a permanent pressure loss. Owing to its tendency to become soiled, a rotameter for its part is not suitable for use on a continual basis in conventional air-conditioning plants.

Measuring devices for measuring the volume flow of a fan are also known from US-A-3 759 098 and US-A-3 751 982.

With the device according to the invention, a crucial improvement is achieved with respect to the disadvantages presented above. In order to realize this, the device according to the invention is characterized in what is disclosed in Claim 1.

It can be regarded as the most important advantage of the invention that the total air volume flow rate in an air-conditioning plant can be obtained easily and reliably with one measurement and one measuring tool. It is a further advantage that the volume flow rate is obtained as a continuous value, in which case, for example, disturbances are visible immediately and the control of the plant is effective, since the feedback time constant is low.

The invention is described below in detail with reference to the accompanying drawings.

Figure 1 depicts a measuring device according to the invention, installed in a fan.

Figure 2 depicts one embodiment of the measuring part of the measuring device according to the invention.

Figure 3 depicts other embodiments of the measuring part of the measuring device according to the invention.

The measuring device according to the invention comprises the housing 1 of the device and a measuring part 2. The housing of the measuring device 1 is connected to the pressure aperture of the fan 3 in such a way that the inner surface 8 of the housing on the same side as the measuring part forms a continuation of the extended cut-off 9 of the fan in the flow direction F. The pressure difference measured in the measuring part 2, which is located immediately adjacent to the inner surface 8 of the housing 1, or close to the inner surface 8, and transversely to the flow F and which extends over its length c substantially across the whole housing from its one side 11 to its other side 11, is proportional to the volume flow of the fan. Advantageously the length c of the measuring part 2, transverse to the housing, is perpendicular to the flow direction F.

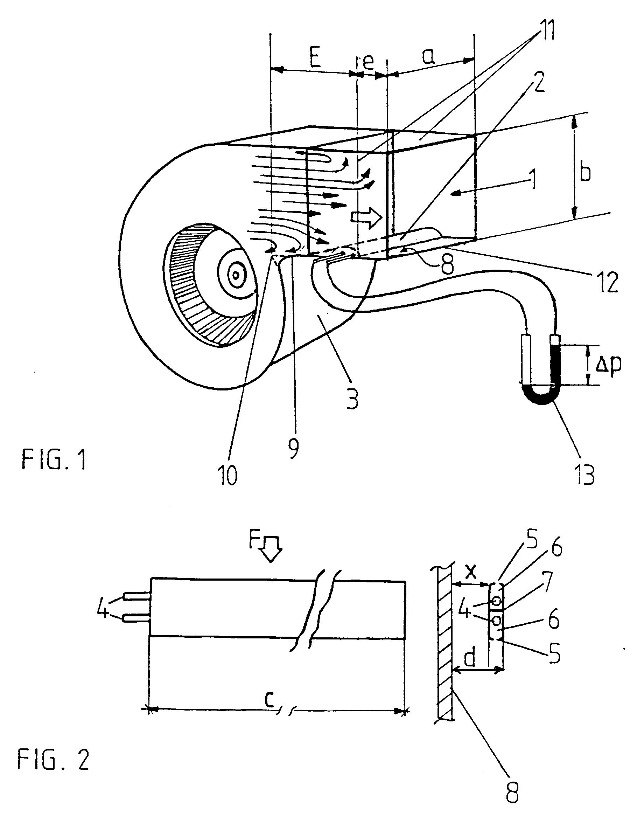

The housing 1 of the device is a tubular sleeve which has the size and shape of the pressure aperture of the fan and does not throttle the flow. The measuring part 2 is located on that inner surface 8 of the housing or close to that inner surface 8 of the housing which constitutes the cut-off 10 or extended cut-off 9 of the fan sleeve, or a continuation of them, but at a distance of at minimum E = 0.5 x b from the real or theoretical cut-off 10 of the sleeve mantle in the flow direction F. If the distance E of the measuring part 2 from the cut-off 10 or some other point causing flow disturbance or throttling is clearly more than 1 x b, the measuring part can be located even further away from the inner surface 8 on the same side as the extended cut-off in the cross section of the housing 1. When the above conditions are fulfilled, the measuring device functions reliably within the entire wide normal operating range of the air-conditioning plant even if the operation of the plant is regulated by throttling the flow even drastically. Figure 1 also depicts the flow field in the pressure aperture of the fan and in its vicinity, when the flow is strongly throttled by non-depicted means, for example by using control dampers, in some other part of the pipe system. It can be seen from Figure 1 that in the measuring device according to the invention the measuring part remains in an even pressure field in spite of the turbulence caused by the throttling. If the throttling is less vigorous, the flow field is more even uniform, i.e. less turbulent. The length of the housing 1 of the measuring device in the direction of the flow must be such that the distance E of the measuring part from the trailing edge 12 of the housing is at minimum 0.3 x b, to avoid the turbulence, etc., caused by the trailing edge or other similar discontinuity point, and to maintain reliability.

Figure 2 depicts the measuring part 2 of the measuring device. The pressure caused by the gas flow F is transmitted via the pressure-measuring apertures 5 and chambers 6 to the pressure-measuring tubes 4 and further to the differential pressure gauge 13. A partition 7 separates the pressure-measuring chambers 6 from one another. The differential pressure gauge 13 may be structurally of any known suitable type. The measuring part of the type depicted in Figure 2 is suitable for use in such a way that the straight or somewhat curved surface between the pressure-measuring apertures 5 is either pressed tightly against the inner surface 8 of the housing or is at a small distance x from the inner surface 8 of the housing.

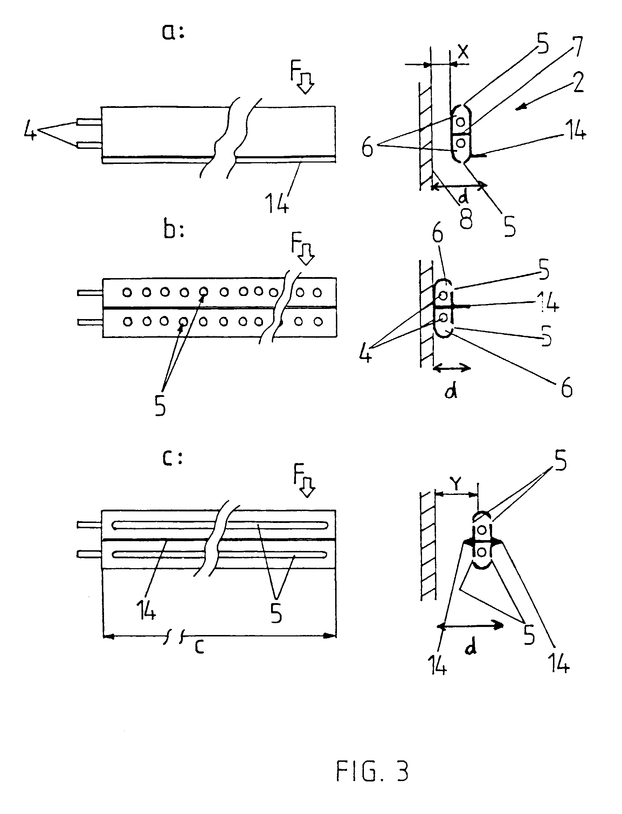

Figures 3a and 3b depict certain other embodiments of the measuring part 2 of the measuring device; these embodiments are suitable for being positioned either tightly against the inner surface 8 or at a small distance x from the inner surface 8. Figure 3c further depicts one embodiment of the measuring part 2 which is suitable for being located at a small distance y from the surface 8. All these embodiments have pressure-measuring apertures 5 and chambers 6, pressure-measuring tubes 4 and partitions 7. In addition, each of the measuring parts in Figure 3 has an external protrusion 14 to increase the pressure difference. The protrusion 14, as well as the entire measuring part 2, is dimensionally as small as possible compared with the cross sectional dimension b of the housing 1 and at the same time of the pressure aperture of the fan, in order to avoid a throttling effect in the flow.

By using a measuring part of the type described above (Figures 2 and 3) it is possible to measure directly not only the pressure difference but also the absolute pressure p prevailing inside the housing, i.e. in the measuring duct. Since, furthermore, in the measuring part there is located a temperature sensor for measuring the temperature T of the gas, which measuring can be carried out in several simple ways, all the values necessary for the determination of the volume flow rate and for compensating for the reading in all various operating situations are available. In this case, an output of the volume flow rate qᵥ of the fan can be obtained directly by a simple arrangement, since it is an unambiguous function of the quantities measured, i.e. qᵥ = f (Δp, p, T).

The measuring part 2 of the measuring device can, depending on its design, be installed inside the housing 1 also so as to turn about its longitudinal axis, and especially so if the measuring part 2 is designed to be of a blade structure type in order to produce a pressure difference.

## Claims

1. A fan including a measuring device for measuring a pressure difference (Δp) and thereby the volume flow (qᵥ) of a fan by carrying out the measuring of the pressure difference (Δp) in a two-chamber measuring part (2) located against or close to the inner surface (8) of only that side of the outlet duct part (1) which is the fan cut-off (10) or extended cut-off (9), or a continuation of the same; wherein each chamber has small-diameter apertures (5) and/or at least one corresponding gap opening substantially parallel or perpendicular to the principal flow direction (F); wherein the measuring part (2) is installed in such a manner that the principal direction (F) of the flow to be measured is substantially perpendicular to the length (C) of the measuring part; wherein the height (d) of the measuring part (2), in a direction perpendicular to said inner surface (8), is small compared with the transverse dimension (b) of the duct part (1) perpendicular to said inner surface (8); and wherein the measuring part (2) is at a distance from the cut-off (10) which is at least equal to one-half of said transverse dimension (b) of the duct part (1).

2. A fan according to claim 1, wherein the length (C) of the measuring part (2) is substantially equal to the width (a) of inner surface (8) transverse to the flow direction (F).

3. A fan according to claim 1, wherein the distance of the measuring part (2) from the cut-off (10) is equal to said transverse dimension (b); and wherein the trailing edge (12) of the duct part (1) is at such a distance from the measuring part (2) as is at least equal to 0.3 times said transverse dimension.

4. A fan according to claim 2 or 3, wherein the measuring part (2) is installed tightly against the surface (8) in such a way that the flow to be measured passes on only one side of the measuring part.

5. A fan according to claim 2 or 3, wherein the measuring part (2) is installed in the housing (1) at a small distance (x,y) from its inner surface (8) in such a manner that the flow to be measured passes on both sides of the measuring part.

6. A fan according to claim 4 to 5, wherein there are said small-diameter pressure-measuring apertures (5) and/or at least one corresponding gap opening, in relation to the flow, substantially parallel to the direction (F) of the flow.

7. A fan according to claim 4 or 5, wherein the height (d) of the measuring part (2) in the area between its pressure-measuring apertures or gaps (5) is greater than in the area of the pressure-measuring chambers (6), the pressure-measuring apertures (5) or at least one pressure-measuring gap.

8. A fan according to claim 4 or 7, wherein the walls of the pressure-measuring chambers (6) of the measuring part (2) have small-diameter apertures (5) and/or at least one corresponding gap opening into the flow substantially perpendicularly to the direction (F) of the flow on that side of the pressure-measuring chamber on which the flow is to be measured.

9. A fan according to claim 5 or 7, wherein the walls of the pressure-measuring chambers (6) of the measuring part (2) have small-diameter apertures (5) and/or at least one corresponding gap opening into the flow substantially perpendicularly to the direction of the flow in a direction transverse to the two opposite sides (F) of the pressure-measuring chambers (6).

10. A fan according to claim 1, wherein the measuring part (2) is provided with a temperature-measuring sensor.

## Patentansprüche

1. Gebläse mit einer Meßvorrichtung zum Messen einer Druckdifferenz (Δp) und somit des Volumenstromes (qᵥ) eines Gebläses durch Ausführen der Messung der Druckdifferenz (Δp) in einem Zweikammer-Meßteil (2), das an oder nahe an der Innenoberfläche (8) lediglich der Seite des Auslaßleitungsteiles (1) angeordnet ist, welche der Gebläseabschluß (10) oder ein verlängerter Abschluß (9) oder eine Fortsetzung desselben ist, wobei jede Kammer Öffnungen (5) geringen Durchmessers und/oder wenigstens einen entsprechenden Spalt aufweist, die bzw. der sich im wesentlichen parallel oder rechtwinklig zu der Hauptströmungsrichtung (F) öffnen bzw. öffnet, wobei das Meßteil (2) auf solche Weise installiert ist, daß die Hauptrichtung (F) der Strömung, die zu messen ist, im wesentlichen rechtwinklig zu der Länge (C) des Meßteiles liegt, wobei die Höhe (d) des Meßteiles (2) in einer Richtung rechtwinklig zu der inneren Oberfläche (8) im Vergleich mit der Querabmessung (b) des Leitungsteiles (1) rechtwinklig zu der inneren Oberfläche (8) klein ist, und wobei das Meßteil (2) in einem Abstand von dem Abschluß (10) angeordnet ist, der wenigstens gleich der Hälfte der Querabmessung (b) des Leitungsteiles (1) ist.

2. Gebläse nach Anspruch 1, wobei die Länge (C) des Meßteils (2) im wesentlichen gleich der Breite (a) der inneren Oberfläche (8) quer zu der Strömungsrichtung (F) ist.

3. Gebläse nach Anspruch 1, wobei der Abstand des Meßteiles (2) von dem Abschluß (10) gleich der Querabmessung (b) ist, und wobei der hintere Rand (12) des Leitungsteiles (1) in einem solchen Abstand von dem Meßteil (2) vorgesehen ist, der wenigstens gleich dem 0,3-fachen der Querabmessung ist.

4. Gebläse nach Anspruch 2 oder 3, wobei das Meßteil (2) fest an der Oberfläche (8) derart installiert ist, daß die zu messende Strömung lediglich eine Seite des Meßteiles passiert.

5. Gebläse nach Anspruch 2 oder 3, wobei das Meßteil (2) in dem Gehäuse (1) in einem geringen Abstand (x, y) von der inneren Oberfläche (8) auf eine solche Weise angeordnet ist, daß die zu messende Strömung beide Seiten des Meßteiles passiert.

6. Gebläse nach Anspruch 4 oder 5, wobei Druckmeßöffnungen (5) geringen Durchmessers und/oder wenigstens ein Spalt vorgesehen sind, die bzw. der sich in bezug auf die Strömung im wesentlichen parallel zu der Richtung (F) der Strömung öffnen bzw. öffnet.

7. Gebläse nach Anspruch 4 oder 5, wobei die Höhe (d) des Meßteiles (2) in dem Bereich zwischen seinen Druckmeßöffnungen oder Spalten (5) größer ist als in dem Bereich der Druckmeßkammern (6), der Druckmeßöffnungen (5) oder wenigstens eines Druckmeßspaltes.

8. Gebläse nach Anspruch 4 oder 7, wobei die Wände der Druckmeßkammern (6) des Meßteils (2) Öffnungen (5) geringen Durchmessers und/oder wenigstens einen entsprechenden Spalt aufweisen, die bzw. der sich in den Strom im wesentlichen rechtwinklig zu der Richtung (F) des Stromes an der Seite der Druckmeßkammer öffnen bzw. öffnet, an welcher die Strömung zu messen ist.

9. Gebläse nach Anspruch 5 oder 7, wobei die Wände der Druckmeßkammern (6) des Meßteils (2) Öffnungen (5) geringen Durchmessers und/oder wenigstens einen entsprechenden Spalt aufweisen, die bzw. der sich in die Strömung im wesentlichen rechtwinklig zu der Richtung der Strömung in einer Richtung quer zu den beiden gegenüberliegenden Seiten (F) der Druckmeßkammern (6) öffnen bzw. öffnet.

10. Gebläse nach Anspruch 1, wobei das Meßteil (2) mit einem Temperaturmeßfühler versehen ist.

## Revendications

1. Un ventilateur comprenant un dispositif de mesure pour mesurer une différence de pression (Δp) et, de cette manière, le débit volume (qᵥ) d'un ventilateur, en effectuant la mesure de la différence de pression (Δp) dans une partie de mesure à deux chambres (2) située contre, ou près de, la surface intérieure (8) du côté seulement de la partie de conduit de sortie (1) qui est le point de coupure (10) ou de coupure étendue (9) ou une continuation de celui-ci; dans lequel chaque chambre a des ouvertures de petit diamètre (5) et/ou au moins une ouverture à interstice correspondant, sensiblement parallèle ou perpendiculaire à la direction d'écoulement principal (F); dans lequel la partie (2) est installée de manière que la direction principale (F) de l'écoulement à mesurer soit sensiblement perpendiculaire à la longueur (C) de la partie de mesure; la hauteur (d) de la partie de mesure (2), dans une direction perpendiculaire à ladite surface intérieure (8) étant petite en comparaison de la dimension transversale (b) de la partie de conduit (1) perpendiculairement à ladite surface intérieure (8); et dans lequel la partie de mesure (2) est située à une distance donnée du point de coupure (10), qui est au moins égale à la moitié de ladite dimension transversale (b) de la partie de conduite (1).

2. Un ventilateur selon la revendication 1, dans lequel a longueur (C) de la partie de mesure (2) est sensiblement égale à la largeur (a) de la surface intérieure (8), transversalement à la direction de l'écoulement (F).

3. Un ventilateur selon la revendication 1, dans lequel la distance de la partie de mesure (2) vis-à-vis du point de coupure (10) est égale à ladite dimension transversale (b); et dans lequel le bord de fuite (12) de la partie de conduite (1) est à distance de la partie de mesure (2) au moins égale à 0,3 fois ladite dimension transversale.

4. Un ventilateur selon la revendications 2 ou 3, dans lequel la partie de mesure (2) est installée à proximité immédiate contre la surface (8), de manière que l'écoulement à mesurer passe sur seulement un côté de la partie de mesure.

5. Un ventilateur selon la revendication 2 ou 3, dans lequel la partie de mesure (2) est installée dans le carter (1) à une petite distance (x, y) de sa surface intérieure (8), de manière que l'écoulement à mesurer passe sur les deux côtés de la partie de mesure.

6. Un ventilateur selon la revendication 4 ou 5, dans lequel il y a des ouvertures de mesure de pression (5) de petit diamètre et/ou au moins une ouverture d'interstice correspondant, en relation à l'écoulement, sensiblement parallèle à la direction (F) de l'écoulement.

7. Un ventilateur selon la revendication 4 ou 5, dans lequel la hauteur (d) de la partie de mesure (2) dans l'aire existant entre les ouvertures ou interstices (5) de mesure de pression est supérieure à ce que l'on a dans l'aire des chambres de mesure de pression (6), les ouvertures de mesure de pression (5) ou au moins un interstice de mesure de pression.

8. Un ventilateur selon la revendication 4 ou 7, dans lequel les parois des chambres de mesure de pression (6) de la partie de mesure (2) ont des ouvertures de petit diamètre (5) et/ou au moins un interstice correspondant, ouvrant dans l'écoulement sensiblement perpendiculairement à la direction (F) de l'écoulement, du côté de la chambre de mesure de pression duquel l'écoulement doit être mesuré.

9. Un ventilateur selon la revendication 5 ou 7, dans lequel les parois des chambres de mesure de pression (6) de la partie de mesure (2) ont des ouvertures de petit diamètre (5) et/ou au moins un interstice correspondant, ouvrant dans l'écoulement sensiblement perpendiculairement à la direction de l'écoulement, dans une direction transversale par rapport au deux côtés (F) opposés des chambres de mesure de pression (6).

10. Un ventilateur selon la revendication 1, dans lequel la partie de mesure (2) est pourvue d'un capteur de mesure de température.
